# EUROPEAN PATENT APPLICATION

(11) **EP 4 682 989 A1**
(43) Date of publication of application: **21.01.2026**
(21) Application number: 24806864.5
(22) Date of filing: 27.03.2024
(51) Int. Cl.: H01M 4/58, H01M 4/136

(54) **POSITIVE ELECTRODE ACTIVE MATERIAL PARTICLES, POSITIVE ELECTRODE ACTIVE MATERIAL MIXTURE, POSITIVE ELECTRODE FOR POWER STORAGE ELEMENT, POWER STORAGE ELEMENT, AND POWER STORAGE DEVICE**

(30) Priority: 18.05.2023 JP 2023082546
(71) Applicant: GS Yuasa International Ltd., Kisshoin, Minami-ku, Kyoto-shi, Kyoto 601-8520 (JP)
(72) Inventor: ENDO, Daisuke, Kyoto-shi, Kyoto 601-8520 (JP)
(74) Representative: Isarpatent
(86) International application number: PCT/JP2024/012215
(87) International publication number: WO 2024/236910

(57) **Abstract**

Positive active material particles according to one aspect of the present invention include a lithium transition metal compound having a polyanion structure, in which a breaking test force is 3.5 mN or more.

## Description

### TECHNICAL FIELD

The present invention relates to positive active material particles, a positive active material composite, a positive electrode for an energy storage device, an energy storage device, and an energy storage apparatus.

### BACKGROUND ART

Nonaqueous electrolyte secondary batteries typified by lithium ion nonaqueous electrolyte secondary batteries are widely used in electronic devices such as personal computers and communication terminals, motor vehicles, and the like because the batteries are high in energy density. The nonaqueous electrolyte secondary batteries generally include an electrode assembly including a pair of electrodes electrically isolated by a separator, and a nonaqueous electrolyte interposed between the electrodes, and are configured to be charged and discharged by transferring charge-transporting ions between the two electrodes. Also, capacitors such as lithium ion capacitors and electric double-layer capacitors, energy storage devices using electrolytes other than nonaqueous electrolytes, and the like are also widely used as energy storage devices other than nonaqueous electrolyte secondary batteries.

As a positive active material used in an energy storage device, a lithium transition metal compound having a polyanion structure such as lithium iron phosphate is known. Patent Document 1 describes a nonaqueous electrolyte secondary battery including a positive electrode containing olivine lithium iron phosphate (lithium iron phosphate) as a positive active material and a negative electrode containing graphite as a negative active material.

### PRIOR ART DOCUMENT

### PATENT DOCUMENT

Patent Document 1: JP-A-2021-153021

### SUMMARY OF THE INVENTION

### PROBLEMS TO BE SOLVED BY THE INVENTION

When positive active material particles including a lithium transition metal compound having a polyanion structure are used for a positive electrode of an energy storage device, the initial power of the energy storage device may be decreased due to low adhesion between a positive substrate and the positive active material particles.

The present invention has been made in view of the above circumstances, and an object of the present invention is to provide positive active material particles capable of increasing the initial power of an energy storage device.

### MEANS FOR SOLVING THE PROBLEMS

Positive active material particles according to one aspect of the present invention include a lithium transition metal compound having a polyanion structure, in which a breaking test force is 3.5 mN or more.

Positive active material particles according to another aspect of the present invention include a lithium transition metal compound having a polyanion structure, in which a breaking test force is 4.2 mN or more.

Positive active material particles according to another aspect of the present invention include a lithium transition metal compound having a polyanion structure and at least one of the zirconium element and the niobium element, in which a breaking test force is 3.5 mN or more.

### ADVANTAGES OF THE INVENTION

Positive active material particles according to one aspect of the present invention can increase the initial power of an energy storage device.

### BRIEF DESCRIPTION OF THE DRAWINGS

Fig. 1 is a transparent perspective view illustrating an embodiment of an energy storage device including positive active material particles according to the present invention.
Fig. 2 is a schematic view illustrating an embodiment of an energy storage apparatus configured by assembling a plurality of energy storage devices including the positive active material particles according to the present invention.

### MODE FOR CARRYING OUT THE INVENTION

First, outlines of positive active material particles and other embodiments disclosed in the present specification will be described.

[1] Positive active material particles according to one aspect of the present invention include a lithium transition metal compound having a polyanion structure, in which a breaking test force is 3.5 mN or more.

The positive active material particles according to [1] can increase the initial power of an energy storage device. The reason therefor is not clear, but the following reason is presumed.

In a case where conventional positive active material particles include a lithium transition metal compound having a polyanion structure, the positive active material particles are likely to be deformed, damaged, or the like when pressed onto a positive substrate during the preparation of a positive electrode. As a result, it is difficult to arrange the positive active material particles so that the particles are embedded in the surface of the positive substrate, and it may be difficult to improve the adhesion between the positive substrate and the positive active material particles. On the other hand, the positive active material particles according to [1] have a breaking test force of 3.5 mN or more, and thus the hardness thereof is high. Therefore, the positive active material particles are hardly deformed, damaged, or the like even when pressed onto the positive substrate and are easily arranged so as to be embedded in the surface of the positive substrate, and the adhesion between the positive substrate and the positive active material particles is likely to be enhanced. When the adhesion between the positive active material particles and the positive substrate is high, interface resistance between the positive active material particles and the positive substrate can be reduced. Accordingly, the initial power of the energy storage device can be increased. It is considered that by evaluating the hardness of particles using the breaking test force, the hardness of the particles can be appropriately evaluated regardless of the size of the particles to be measured, as compared with the case of using as an index the change in the particle size during compression of the particles.

In the present invention, "having a polyanion structure" refers to having an oxoacid anion (PO₄³⁻, SiO₄⁴⁻, BO₃³⁻, or the like).

In the present invention, the term "breaking test force" refers to a test force at which a crack occurs in the positive active material particles when the positive active material particles are compressed. The breaking test force of the positive active material particles is measured by a micro-compression test using a micro-compression tester ("MCT-511" manufactured by Shimadzu Corporation). As a probe, a flat diamond indenter with a diameter of 50 µm is used. Pressure is applied to one positive active material particle while changing the test force at a constant speed from 1 mN to 30 mN at a probe speed of 0.134 mN/sec. It is assumed that a crack occurs in the positive active material particle at an inflection point of the obtained test force-displacement graph, and a test force at this inflection point is defined as a breaking test force. The breaking test force is measured for five positive active material particles, and the average value thereof is adopted. The positive active material particles to be measured are selected from particles with a particle size of 1/2 times or more and 2 times or less the average particle size of the positive active material particles. The "particle size" of each particle is defined as a mean value of the minor axis and the major axis. The minor axis is the shortest diameter passing through the center of the minimum circumscribed circle of a particle, and the major axis is the diameter passing through the center and orthogonal to the minor axis. When there are two or more shortest diameters, the one whose orthogonal diameter is the longest is defined as the minor axis. The "average particle size" refers to a value at which a volume-based integrated distribution is 50%, the volume-based integrated distribution being calculated in accordance with JIS-Z-8819-2 (2001) based on a particle size distribution obtained by performing measurement on a diluted solution, which is obtained by diluting particles with a solvent, by a laser diffraction/scattering method in accordance with JIS-Z-8825 (2013).

In a case where the positive active material particles are incorporated into an energy storage device as a positive active material, the measurement of the breaking test force is performed on the particles in a fully discharged state by the following method. First, the energy storage device is brought into a fully charged state by subjecting the energy storage device to constant current charge at a charge current of 0.05 C until the voltage reaches an end-of-charge voltage under normal usage. After a 30-minute pause, the energy storage device is subjected to constant current discharge at a discharge current of 0.05 C until the voltage reaches an end-of-discharge voltage (lower limit voltage) under normal usage. After the energy storage device is disassembled to take out the positive electrode, a test battery using a metal lithium electrode as the counter electrode is assembled, and the positive electrode is adjusted to the fully discharged state by performing constant current discharge at a current value of 10 mA per 1 g of a positive composite until the positive potential reaches 2.0 V vs. Li/Li⁺. The device is disassembled again to take out the positive electrode. An electrolyte or the like adhering to the positive electrode that has been taken out is thoroughly washed with dimethyl carbonate and dried at room temperature all day and night, and then the positive active material particles are collected. The collected positive active material particles are subjected to measurement. The operations from the disassembly of the energy storage device to the collection of the positive active material particles are performed in an argon atmosphere having a dew point of -60°C or lower. The term "under normal usage" refers to the use of the energy storage device while employing charge conditions and discharge conditions recommended or specified for the energy storage device. Regarding the charge conditions, for example, when a charger for the energy storage device is prepared, the term refers to the case of using the energy storage device by applying the charger.

[2] Positive active material particles according to one aspect of the present invention include a lithium transition metal compound having a polyanion structure, in which a breaking test force is 4.2 mN or more.

Since the positive active material particles according to [2] have a breaking test force of 4.2 mN or more and thus are high in hardness, the interface resistance between the positive active material particles and the positive substrate can be reduced for the same reason as that described for [1] above. Accordingly, the initial power of the energy storage device can be increased.

[3] Positive active material particles according to another aspect of the present invention include a lithium transition metal compound having a polyanion structure and at least one of the zirconium element and the niobium element, in which a breaking test force is 3.5 mN or more.

Since the positive active material particles according to [3] have a breaking test force of 3.5 mN or more and thus are high in hardness, the interface resistance between the positive active material particles and the positive substrate can be reduced for the same reason as that described for [1] above. In addition, since the zirconium element and the niobium element act as lithium ion conductors in the form of oxides or the like, the zirconium element and the niobium element contribute to the reductions in the interface resistance between the positive active material particles and the interface resistance between the positive active material particles and the positive substrate. Therefore, the initial power of the energy storage device can be synergistically increased since the positive active material particles according to [3] have the breaking test force of 3.5 mN or more and include at least one of the zirconium element and the niobium element.

[4] A positive active material composite according to another aspect of the present invention includes the positive active material particles according to any one of [1] to [3].

Since the positive active material composite according to [4] includes the positive active material particles according to any one of [1] to [3], the initial power of the energy storage device can be increased.

[5] A positive electrode for an energy storage device according to another aspect of the present invention includes a positive substrate and the positive active material composite according to [4], the positive active material composite being stacked on the positive substrate. The positive active material composite according to [4] may be directly stacked on the positive substrate or may be stacked on the positive substrate with an intermediate layer containing a conductive agent or the like interposed therebetween.

Since the positive electrode for an energy storage device according to [5] includes the positive active material composite according to [4] including the positive active material particles, the initial power of the energy storage device can be increased.

[6] An energy storage device according to another aspect of the present invention includes the positive electrode for an energy storage device according to [5].

The initial power of the energy storage device according to [6] is large since the energy storage device includes the positive electrode for an energy storage device according to [5], the positive electrode including the positive active material particles.

[7] An energy storage apparatus according to still another aspect of the present invention includes two or more energy storage devices, including one or more energy storage devices according to [6].

Since the energy storage apparatus according to [7] includes one or more energy storage devices according to [6], the initial power is high.

Hereinafter, positive active material particles, a positive active material composite, a positive electrode for an energy storage device, a method for producing a positive electrode, an energy storage device, an energy storage apparatus, and a method for producing an energy storage device according to an embodiment of the present invention, and other embodiments will be described in detail. It is to be noted that the name of each structural member (each component) used in each embodiment is in some cases different from the name of each structural member (each component) used in BACKGROUND ART.

### [Positive active material particles]

### [Composition of positive active material particles A]

Positive active material particles A according to an embodiment of the present invention include a lithium transition metal compound having a polyanion structure. In addition, the breaking test force of the positive active material particles A is 3.5 mN or more. The lithium transition metal compound having a polyanion structure is usually used in the form of granules coated with a carbon material, from the viewpoint of electron conductivity and the like. In other words, the positive active material particles A according to an embodiment of the present invention may more specifically be granules obtained by coating particles including the lithium transition metal compound having a polyanion structure with a carbon material.

Examples of the lithium transition metal compound having a polyanion structure include compounds containing an oxoacid anion (PO₄³⁻ SO₄²⁻, SiO₄⁴⁻, BO₃³⁻, VO₄³⁻, or the like), a lithium ion, and a transition metal ion. The oxoacid anion may be a condensed anion (P₂O₇⁴⁻, P₃O₁₀⁵⁻, or the like). The lithium transition metal compound having a polyanion structure may have an olivine-type crystal structure. The lithium transition metal compound having a polyanion structure is typically a polyanion compound containing the lithium element and a transition metal element, and may further contain other elements (for example, a halogen element). As the transition metal element of the lithium transition metal compound having a polyanion structure, the iron element, the manganese element, the nickel element, and the cobalt element are preferable, the iron element and the nickel element are more preferable, and the iron element is still more preferable. The oxoacid anion of the lithium transition metal compound having a polyanion structure is preferably a phosphate anion (PO₄³⁻).

As the lithium transition metal compound having a polyanion structure, a compound represented by the following formula (1) is preferable.

LiₐM_{b}(AO_{c})_{d}Xₑ ··· (1)

In the formula (1), M represents at least one transition metal element. A is at least one selected from B, Al, Si, P, S, Cl, Ti, V, Cr, Mo, and W. X represents at least one halogen element. a, b, c, d, and e are numbers that satisfy 0 < a ≤ 3, 0 < b ≤ 2, 2 ≤ c ≤ 4, 1 ≤ d ≤ 3, and 0 ≤ e ≤ 1. Each of a, b, c, d, and e may be an integer or a decimal.

M in the formula (1) is preferably any one of Fe, Mn, Ni, and Co, or a combination of any two thereof. M is more preferably Fe or Mn, or a combination thereof, and still more preferably Fe. In addition, the content of Fe in M is preferably 50 mol% or more, more preferably 70 mol% or more, 90 mol% or more, or 99 mol% or more. A is preferably P. X is preferably F. As an embodiment, a = 1, b = 1, c = 4, d = 1, and e = 0 may be preferable.

Specific examples of the lithium transition metal compound having a polyanion structure include LiFePO₄, LiCoPO₄, LiFe_{0.5}Co_{0.5}PO₄, LiMnPO₄, LiNiPO₄, LiMn_{0.5}Fe_{0.5}PO₄, LiCrPO₄, LiFeVO₄, Li₂FeSiO₄, Li₂Fe₂(SO₄)₃, LiFeBO₃, LiFePO_{3.9}F_{0.2}, Li₃V₂(PO₄)₃, Li₂MnSiO₄, and Li₂CoPO₄F. Some of atoms or polyanions in the lithium transition metal compound having a polyanion structure may be substituted with other atoms or anion species. One of the lithium transition metal compound having a polyanion structure may be used singly, or two or more thereof may be used in mixture.

The content of the lithium transition metal compound having a polyanion structure in the particle including the lithium transition metal compound having a polyanion structure may be 60% by mass or more, 80% by mass or more, 90% by mass or more, 95% by mass or more, or 99% by mass or more.

While the particles including the lithium transition metal compound having a polyanion structure may be a plurality of primary particles each existing singly without being aggregated (single particles), the particles are preferably secondary particles formed by aggregation of a plurality of primary particles. The particles are, for example, secondary particles of the lithium transition metal compound having a polyanion structure.

In an embodiment of the present invention, the positive active material particles A are constituted by coating the particles including the lithium transition metal compound having a polyanion structure with a carbon material. A part of the carbon material may be present inside the particles including the lithium transition metal compound having a polyanion structure. In the positive active material particle A, there may be a portion not coated with the carbon material (for example, a portion where the lithium transition metal compound having a polyanion structure is exposed).

Since the particles including the lithium transition metal compound having a polyanion structure are coated with the carbon material, the positive active material particles A can exhibit sufficient electron conductivity between the particles. The carbon material is, for example, an inorganic material in which the content of the carbon element is 80% by mass or more and 100% by mass or less. The content of the carbon element in the carbon material may be 90% by mass or more or 95% by mass or more. Examples of elements other than the carbon element that may be contained in the carbon material include the oxygen element, the hydrogen element, and the nitrogen element. Examples of the carbon material include graphite and non-graphitic carbon.

The content of the carbon material in the positive active material particle A is preferably 0.1% by mass or more and 20% by mass or less, more preferably 0.2% by mass or more and 10% by mass or less, still more preferably 0.3% by mass or more and 5% by mass or less, and even more preferably 0.5% by mass or more and 2% by mass or less. When the content of the carbon material in the positive active material particle A is equal to or more than the above lower limit, it is possible to, for example, enhance electron conductivity. When the content of the carbon material in the positive active material particle A is equal to or less than the above upper limit, the content of the lithium transition metal compound having a polyanion structure can be increased, and it is possible, for example, to increase the discharge capacity per volume of a positive electrode using the positive active material particles A.

The total content of the lithium transition metal compound having a polyanion structure and the carbon material in the positive active material particle A is preferably 90% by mass or more and 100% by mass or less, and may be 95% by mass or more, 98% by mass or more, 99% by mass or more, or 99.9% by mass or more.

The lower limit of the breaking test force of the positive active material particles A is 3.5 mN as described above, preferably 4.2 mN, more preferably 6.0 mN, still more preferably 8.0 mN, and even more preferably 8.5 mN. When the breaking test force is equal to or more than the above lower limit, the adhesion between the positive active material particles A and the positive substrate can be enhanced when the positive active material particles A are pressed onto the positive substrate. Accordingly, the initial power of the energy storage device can also be increased. Meanwhile, the upper limit of the breaking test force of the positive active material particles A is preferably 30 mN, more preferably 25 mN, and still more preferably 20 mN, from the viewpoint of producibility. The breaking test force of the positive active material particles A may be equal to or more than any of the above lower limits and equal to or less than any of the above upper limits. When an intermediate layer containing a conductive agent or the like is formed on the positive substrate of the energy storage device, the positive active material particles A can be pressed onto the positive substrate with the intermediate layer interposed therebetween. In this case as well, the adhesion between the positive active material particles A and the intermediate layer or the positive substrate can be enhanced when the positive active material particles A are pressed onto the positive substrate with the intermediate layer interposed therebetween.

The average particle size of the positive active material particles A is preferably 0.5 µm or more and 30 µm or less, more preferably 1 µm or more and 25 µm or less, still more preferably 2 µm or more and 20 µm or less, even more preferably 4 µm or more and 15 µm or less, and even more preferably 6 µm or more and 12 µm or less. When the average particle size of the positive active material particles A falls within the above range, the contact area between the positive active material particles A and the positive substrate or the intermediate layer described above can be increased, whereby the initial power of the energy storage device can be further increased. When the average particle size of the positive active material particles A falls within the above range, it is possible, for example, to increase the electrode density and the power density of the positive electrode obtained using the positive active material particles A. A crusher, a classifier, or the like is used to obtain the positive active material particles A with a predetermined average particle size. Examples of a crushing method include a method of using a mortar, a ball mill, a sand mill, a vibratory ball mill, a planetary ball mill, a jet mill, a counter jet mill, a whirling airflow-type jet mill, a sieve, or the like. Wet crushing which is performed in the presence of water or an organic solvent such as hexane can also be employed during crushing. As a classification method, a sieve, a wind force classifier, or the like is used in a dry or wet manner as necessary.

The positive active material particles A are preferably spherical from the viewpoint of increasing the contact area between the positive active material particles A and the positive substrate or the intermediate layer described above. From the same viewpoint, the average aspect ratio of the positive active material particles A is preferably 1.0 or more and 1.5 or less, more preferably 1.0 or more and 1.4 or less, and still more preferably 1.0 or more and 1.2 or less. The "average aspect ratio" is determined as an arithmetic mean value obtained by averaging T/Y values for ten positive active material particles A, the T/Y values being ratios between the longest major axis T of the positive active material particle A and the longest minor axis Y in a direction perpendicular to the major axis T in a cross-sectional SEM image of the positive electrode including the positive active material particles A. To acquire the cross-sectional SEM image of the positive electrode, JSM-7001F (manufactured by JEOL Ltd.) is used as a scanning electron microscope. As for the cross-sectional SEM image, a secondary electron image is observed. The acceleration voltage is set to 5 kV. The observation magnification is set so that the number of positive active material particles A appearing in one field of view is three or more and fifteen or less. The obtained cross-sectional SEM image is stored as an image file. In addition, various conditions such as a spot diameter, a working distance, an illumination current, brightness, and focus are appropriately set so as to make the contour of the positive active material particle A clear.

### [Composition of positive active material particles B]

Positive active material particles B according to an embodiment of the present invention include a lithium transition metal compound having a polyanion structure and at least one of the zirconium element and the niobium element. In addition, the breaking test force of the positive active material particles B is 3.5 mN or more. As in the case of the positive active material particles A, the positive active material particles B according to an embodiment of the present invention are granules obtained by coating particles including the lithium transition metal compound having a polyanion structure with a carbon material.

The lithium transition metal compound having a polyanion structure, the carbon material, and the contents thereof in the positive active material particles B can be the same as those in the positive active material particles A described above. The average particle size and the average aspect ratio of the positive active material particles B can also be the same as those of the positive active material particles A.

The lower limit of the breaking test force of the positive active material particles B is 3.5 mN as described above, preferably 4.0 mN, more preferably 6.0 mN, and still more preferably 8.0 mN. When the breaking test force is equal to or more than the above lower limit, the adhesion between the positive active material particles B and the positive substrate or the intermediate layer described above can be enhanced when the positive active material particles B are pressed onto the positive substrate. Accordingly, the initial power of the energy storage device can also be increased. Meanwhile, the upper limit of the breaking test force of the positive active material particles B is preferably 30 mN, more preferably 25 mN, and still more preferably 20 mN, from the viewpoint of producibility. The breaking test force of the positive active material particles B may be equal to or more than any of the above lower limits and equal to or less than any of the above upper limits.

In an embodiment of the present invention, the positive active material particles B include at least one of the zirconium element and the niobium element. The positive active material particles B preferably include at least the zirconium element. At least one of the zirconium element and the niobium element contributes to the reductions in the interface resistance between the positive active material particles B and the interface resistance between the positive active material particles B and the positive substrate. That is, the initial power of the energy storage device can be synergistically increased since the positive active material particles B have the breaking test force of 3.5 mN or more and include at least one of the zirconium element and the niobium element. Examples of the forms of the zirconium element and the niobium element in the positive active material particles B include an oxide of zirconium and an oxide of niobium, which may be, for example, zirconium oxide and niobium oxide.

The zirconium element and the niobium element are preferably present on the outermost surface of the positive active material particle B, and in the present embodiment, the zirconium element and the niobium element are preferably present on the surface of the carbon material. However, a portion of the zirconium element and the niobium element may be present inside the carbon material, may be present at the boundary between the carbon material and the particle including the lithium transition metal compound having a polyanion structure, or may be present inside the particle including the lithium transition metal compound having a polyanion structure.

The total content of the zirconium element and the niobium element in the positive active material particles B is preferably 0.1% by mass or more and 5% by mass or less, more preferably 0.2% by mass or more and 3% by mass or less, still more preferably 0.3% by mass or more and 1% by mass or less, and even more preferably 0.5% by mass or more and 1% by mass or less. When the total content of the zirconium element and the niobium element in the positive active material particles B is equal to or more than the above lower limit, the interface resistance between the positive active material particles B and the positive substrate can be reduced. In addition, when the total content of the zirconium element and the niobium element in the positive active material particles B is equal to or less than the above upper limit, the content of the lithium transition metal compound having a polyanion structure can be increased, and it is possible, for example, to increase the discharge capacity per volume of the energy storage device.

### [Method for producing positive active material particles A and B]

The positive active material particles A and B according to an embodiment of the present invention can be efficiently obtained by adjusting the pH of a reaction liquid using ammonia water or the like when producing a hydroxide precursor in a method using the hydroxide precursor, a lithium source, and a carbon source. By such a production method, spherical positive active material particles A and B high in hardness are obtained. Hereinafter, the production method will be described in detail. However, the positive active material particles A and B according to the present invention are not limited to those produced by the following production method.

First, a hydroxide precursor is obtained by a precipitation reaction between a transition metal ion and a hydroxide ion in water. Specifically, a hydroxide precursor (a hydroxide of a transition metal) is obtained, for example, by adding dropwise an aqueous transition metal salt solution, an aqueous sodium hydroxide solution, and the like to water. The transition metal salt may be any salt that contains a transition metal element constituting a desired lithium transition metal compound and is soluble in water, and for example, iron sulfate, iron chloride, cobalt sulfate, manganese sulfate, nickel sulfate, and the like can be used. An aqueous potassium hydroxide solution or the like can be also used instead of the aqueous sodium hydroxide solution. When the aqueous transition metal salt solution, the aqueous sodium hydroxide solution, and the like are added dropwise to water, an aqueous ammonia solution or the like is further added dropwise to the reaction liquid in order to maintain the pH of the water (reaction liquid) to which these aqueous solutions are added dropwise within a predetermined range. The pH of the reaction liquid is preferably in the range of 8.5 to 11.6. In a case where the pH of the reaction liquid is out of the above range or in a case where the pH of the reaction liquid is within the above range, but the aqueous ammonia solution or the like is not added dropwise to the reaction liquid, the amount of change in the particle size tends to be large upon pressurization of the positive active material particles that are finally obtained. That is, the breaking test force of the positive active material particles tends to be small. The concentration of the aqueous ammonia solution to be added dropwise can be, for example, about 0.3 mol/dm³ or more and 1 mol/dm³ or less. The pH of the reaction liquid can be adjusted by adjusting, for example, the concentration or the amount of dropwise addition of the aqueous ammonia solution, the aqueous sodium hydroxide solution, and the like to be added dropwise. Another aqueous alkaline solution such as an aqueous hydrazine solution may be further added dropwise together with the aqueous ammonia solution or the like. The pH of the reaction liquid can also be adjusted by the amount of dropwise addition of another aqueous alkaline solution or the like.

Subsequently, the obtained hydroxide precursor, a lithium source, and a carbon source are mixed and fired in an inert atmosphere (for example, in a nitrogen atmosphere), thereby obtaining the positive active material particles A according to an embodiment of the present invention. As the lithium source, a compound having a polyanion structure and containing the lithium element, such as LiH₂PO₄, Li₃PO₄, or LiHSO₄, can be suitably used. In addition, as the lithium source, LiOH, lithium halide, or the like can be used. When the lithium source to be used is not a compound having a polyanion structure, a compound having a polyanion structure is further mixed in and fired. As the compound having a polyanion structure, salts of ammonium cations and polyanions can be suitably used, such as NH₄H₂PO₄, (NH₄)₃PO₄, (NH₄)₂HPO₄, (NH₄)₂SO₄, and NH₄VO₃. As the carbon source, an organic substance such as sucrose, lactose, maltose, sucrose, polyvinyl alcohol, or ascorbic acid can be used. The firing temperature can be, for example, 500°C or higher and 800°C or lower.

In the case of producing the positive active material particles B, a raw material containing at least one of the zirconium element and the niobium element is added in the firing in addition to the hydroxide precursor, the lithium source, and the carbon source. Examples of the raw material containing at least one of the zirconium element and the niobium element include a zirconium metal powder and a niobium metal powder.

### [Positive active material composite]

A positive active material composite according to an embodiment of the present invention includes the positive active material particles A or the positive active material particles B. The positive active material composite can contain a positive active material other than the positive active material particles A and the positive active material particles B and optional components such as a conductive agent, a binder, a thickener, and a filler as necessary.

As the positive active material particles A or the positive active material particles B included in the positive active material composite, it is possible to use those described above as the positive active material particles A or the positive active material particles B according to an embodiment of the present invention.

As the positive active material other than the positive active material particles A and the positive active material particles B, various conventionally known positive active materials can be used. However, the content of the positive active material particles A or the positive active material particles B with respect to all positive active materials (the total of the positive active material particles A or the positive active material particles B and other positive active materials) contained in a positive active material layer is preferably 90% by mass or more, more preferably 99% by mass or more, and still more preferably 100% by mass. When the positive active material is substantially composed of only the positive active material particles A or the positive active material particles B as described above, the initial power of the energy storage device can be further increased.

The conductive agent is not particularly limited as long as the conductive agent is a material having conductivity. Examples of such a conductive agent include carbon materials, metals, and conductive ceramics. Examples of the carbon materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and a fullerene. Examples of the form of the conductive agent include a powdery form and a fibrous form. As the conductive agent, one of the above materials may be used singly, or two or more thereof may be used in mixture. Alternatively, these materials may be used in the form of a composite. For example, a composite material of carbon black and CNTs may be used. Among these materials, carbon black is preferable from the viewpoints of electron conductivity and coatability, and in particular, acetylene black is preferable.

The content of the conductive agent in the positive active material composite is preferably 1% by mass or more and 10% by mass or less, more preferably 3% by mass or more and 9% by mass or less. When the content of the conductive agent falls within the above range, the energy density or the like of the energy storage device can be increased. The carbon material contained in the positive active material particles A or the positive active material particles B (the carbon material applied onto a particle containing the lithium transition metal compound having a polyanion structure) is not included in the content of the conductive agent.

Examples of the binder include thermoplastic resins such as fluororesins (polytetrafluoroethylene (PTFE), polyvinylidene fluoride (PVDF), and the like), polyethylene, polypropylene, polyacryl, and polyimide; elastomers such as an ethylene-propylene-diene (EPDM) rubber, sulfonated EPDM, a styrene butadiene rubber (SBR), and a fluororubber; and polysaccharide polymers.

The content of the binder in the positive active material composite is preferably 1% by mass or more and 10% by mass or less, more preferably 3% by mass or more and 9% by mass or less. When the content of the binder falls within the above range, the positive active material can be stably held.

Examples of the thickener include polysaccharide polymers such as carboxymethylcellulose (CMC) and methylcellulose. When the thickener contains a functional group that reacts with lithium or the like, the functional group may be deactivated in advance by methylation or the like. In the case of using the thickener, the content of the thickener in the positive active material composite can be, for example, 0.1% by mass or more and 8% by mass or less, and can also be 5% by mass or less or 1% by mass or less.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide, and aluminosilicate, hydroxides such as magnesium hydroxide, calcium hydroxide, and aluminum hydroxide, carbonates such as calcium carbonate, hardly soluble ionic crystals such as calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite, and mica, and artificial products thereof. In the case of using the filler, the content of the filler in the positive active material composite can be, for example, 0.1% by mass or more and 8% by mass or less, and can also be 5% by mass or less or 1% by mass or less.

The positive active material composite may contain a typical nonmetal element such as B, N, P, F, Cl, Br, or I, a typical metal element such as Li, Na, Mg, Al, K, Ca, Zn, Ga, Ge, Sn, Sr, or Ba, or a transition metal element such as Sc, Ti, V, Cr, Mn, Fe, Co, Ni, Cu, Mo, Zr, Nb, or W as components other than the positive active material particles A, the positive active material particles B, other positive active materials, the conductive agent, the binder, the thickener, and the filler.

### [Positive electrode for energy storage device]

A positive electrode for an energy storage device (hereinafter, also referred to as a "positive electrode") according to one embodiment of the present invention includes a positive substrate and a positive active material composite stacked on the positive substrate directly or with an intermediate layer interposed therebetween. The positive active material composite stacked on the positive substrate forms a positive active material layer. As the positive active material composite included in the positive electrode, the one described above as the positive active material composite according to an embodiment of the present invention can be used.

The positive substrate has conductivity. Whether or not the positive substrate has "conductivity" is determined by using a volume resistivity of 10⁻² Ω ·cm as a threshold, the volume resistivity being measured in accordance with JIS-H-0505 (1975). As a material for the positive substrate, a metal such as aluminum, titanium, tantalum, and stainless steel, or an alloy thereof is used. Among these materials, aluminum or an aluminum alloy is preferable from the viewpoints of potential resistance, the magnitude of conductivity, and costs. Examples of the positive substrate include a foil, a deposited film, a mesh, and a porous material, and a foil is preferable from the viewpoint of costs. Therefore, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 µm or more and 50 µm or less, more preferably 5 µm or more and 40 µm or less, still more preferably 8 µm or more and 30 µm or less, and particularly preferably 10 µm or more and 25 µm or less. When the average thickness of the positive substrate falls within the above range, it is possible to increase the strength of the positive substrate as well as increase the energy density per volume of the energy storage device.

The intermediate layer is a layer disposed between the positive substrate and the positive active material layer (positive active material composite). The intermediate layer contains a conductive agent such as carbon particles, thereby reducing contact resistance between the positive substrate and the positive active material layer. The composition of the intermediate layer is not particularly limited, and the intermediate layer contains, for example, a binder and a conductive agent.

### [Method for producing positive electrode]

A method for producing a positive electrode includes, for example, preparing a positive composite paste containing a positive active material composite and a dispersion medium, applying the positive composite paste onto at least one surface of a positive substrate directly or with an intermediate layer interposed therebetween, drying the positive composite paste, and pressing the positive active material composite. As the dispersion medium used for preparing the positive composite paste, an organic solvent is preferably used, and examples of the organic solvent include N-methylpyrrolidone (NMP) and toluene. In addition, it is preferable that the positive active material particles A or the positive active material particles B in the positive active material composite are arranged by the pressing so that at least a portion thereof are embedded in the positive substrate or the intermediate layer.

### [Energy storage device]

An energy storage device according to an embodiment of the present invention includes an electrode assembly including a positive electrode, a negative electrode, and a separator, an electrolyte, and a case that houses the electrode assembly and the electrolyte. The electrode assembly is typically a stacked type in which a plurality of positive electrodes and a plurality of negative electrodes are stacked with the separator interposed therebetween, or a wound type in which the positive electrode and the negative electrode are wound in a state of being stacked with the separator interposed therebetween. The electrolyte is present in a state of being contained in the positive electrode, the negative electrode, and the separator. The electrolyte may be a nonaqueous electrolyte. As an example of the energy storage device, a nonaqueous electrolyte secondary battery (hereinafter, also referred to simply as a "secondary battery") in which the electrolyte is a nonaqueous electrolyte will be described.

### [Positive electrode]

As the positive electrode included in the energy storage device, the one described above as the positive electrode according to an embodiment of the present invention can be used.

### [Negative electrode]

The negative electrode includes a negative substrate and a negative active material layer disposed on the negative substrate directly or with an intermediate layer interposed therebetween. The composition of the intermediate layer is not particularly limited, and for example, can be selected from the compositions exemplified for the positive electrode.

The negative substrate has conductivity. As a material for the negative substrate, a metal such as copper, nickel, stainless steel, nickel-plated steel, and aluminum or an alloy thereof, a carbon material, or the like is used. Among these materials, copper or a copper alloy is preferable. Examples of the negative substrate include a foil, a deposited film, a mesh, and a porous material, and a foil is preferable from the viewpoint of costs. Therefore, the negative substrate is preferably a copper foil or a copper alloy foil. Examples of the copper foil include a rolled copper foil and an electrolytic copper foil.

The average thickness of the negative substrate is preferably 2 µm or more and 35 µm or less, more preferably 3 µm or more and 30 µm or less, still more preferably 4 µm or more and 25 µm or less, and particularly preferably 5 µm or more and 20 µm or less. When the average thickness of the negative substrate falls within the above range, it is possible to increase the strength of the negative substrate as well as increase the energy density per volume of the energy storage device.

The negative active material layer contains a negative active material. The negative active material layer contains optional components such as a conductive agent, a binder, a thickener, and a filler as necessary. The optional components such as a conductive agent, a binder, a thickener, and a filler can be selected from the materials exemplified for the positive electrode.

The negative active material layer may contain a typical nonmetallic element such as B, N, P, F, Cl, Br, or I, a typical metallic element such as Li, Na, Mg, Al, K, Ca, Zn, Ga, Ge, Sn, Sr, or Ba, or a transition metal element such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material can be appropriately selected from known negative active materials. As the negative active material for a lithium ion secondary battery, a material capable of occluding and releasing lithium ions is typically used. Examples of the negative active material include metal Li; metals or metalloids such as Si and Sn; metal oxides or metalloid oxides such as a Si oxide, a Ti oxide, and a Sn oxide; titanium-containing oxides such as Li₄Ti₅O₁₂, LiTiO₂, and TiNb₂O₇; polyphosphoric acid compounds; silicon carbide; and carbon materials such as graphite and non-graphitic carbon (easily graphitizable carbon or non-graphitizable carbon). Among these materials, graphite and non-graphitic carbon are preferable. In the negative active material layer, one of these materials may be used singly, or two or more thereof may be used in mixture.

The "graphite" refers to a carbon material in which the average lattice spacing (d₀₀₂) of the (002) plane determined by an X-ray diffraction method before charge-discharge or in a discharged state is 0.33 nm or more and less than 0.34 nm. Examples of the graphite include natural graphite and artificial graphite. Artificial graphite is preferable from the viewpoint that a material having stable physical properties can be obtained.

The "non-graphitic carbon" refers to a carbon material in which the average lattice spacing (d₀₀₂) of the (002) plane determined by an X-ray diffraction method before charge-discharge or in a discharged state is 0.34 nm or more and 0.42 nm or less. Examples of the non-graphitic carbon include non-graphitizable carbon and easily graphitizable carbon. Examples of the non-graphitic carbon include a resin-derived material, petroleum pitch or a petroleum pitch-derived material, petroleum coke or a petroleum coke-derived material, a plant-derived material, and an alcohol-derived material.

Here, the term "discharged state" refers to a state where discharge has occurred so that lithium ions that can be occluded and released during charge-discharge are sufficiently released from the carbon material serving as a negative active material. For example, the "discharged state" refers to a state where the open circuit voltage is 0.7 V or higher in a half battery that includes, as a working electrode, a negative electrode containing a carbon material as a negative active material, and includes metal Li as a counter electrode.

The "non-graphitizable carbon" refers to a carbon material in which the d₀₀₂ is 0.36 nm or more and 0.42 nm or less.

The "easily graphitizable carbon" refers to a carbon material in which the d₀₀₂ is 0.34 nm or more and less than 0.36 nm.

The negative active material is usually particles (powder). The average particle size of the negative active material can be, for example, 1 nm or more and 100 µm or less. When the negative active material is a carbon material, a titanium-containing oxide, or a polyphosphoric acid compound, the average particle size thereof may be 1 µm or more and 100 µm or less. When the negative active material is Si, Sn, a Si oxide, a Sn oxide, or the like, the average particle size thereof may be 1 nm or more and 1 µm or less. When the average particle size of the negative active material is equal to or more than the above lower limit, the negative active material is easily produced or handled. When the average particle size of the negative active material is equal to or less than the above upper limit, the electron conductivity of the negative active material layer is improved. A crusher, a classifier, or the like is used to obtain a powder with a predetermined particle size. When the negative active material is a metal such as metal Li, the negative active material layer may be in the form of a foil.

The content of the negative active material in the negative active material layer is preferably 60% by mass or more and 99% by mass or less, more preferably 90% by mass or more and 98% by mass or less. When the content of the negative active material falls within the above range, it is possible to achieve a balance between the increased energy density and producibility of the negative active material layer.

### [Separator]

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of the liquid retaining property of the nonaqueous electrolyte. As the material for the substrate layer of the separator, for example, a polyolefin such as polyethylene or polypropylene is preferable from the viewpoint of the shutdown function, and polyimide, aramid, or the like is preferable from the viewpoint of resistance to oxidative decomposition. As the substrate layer of the separator, a composite material of these resins may also be used.

The heat resistant particles contained in the heat resistant layer preferably undergo mass reduction by 5% or less when the temperature is increased from room temperature to 500°C in the air atmosphere at 1 atm, and more preferably undergo mass reduction by 5% or less when the temperature is increased from room temperature to 800°C. Examples of materials of which the mass is reduced by a predetermined percentage or less include inorganic compounds. Examples of the inorganic compounds include oxides such as iron oxide, silicon oxide, aluminum oxide, titanium dioxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; hardly soluble ionic crystals such as calcium fluoride, barium fluoride, and barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compound, a simple substance or a composite of these substances may be used singly, or two or more thereof may be used in mixture. Among these inorganic compounds, silicon oxide, aluminum oxide, or aluminosilicate is preferable from the viewpoint of safety of the energy storage device.

The porosity of the separator is preferably 80% by volume or less from the viewpoint of a strength, and is preferably 20% by volume or more from the viewpoint of discharge performance. Here, the term "porosity" is a volume-based value, and refers to a value measured with a mercury porosimeter.

As the separator, a polymer gel composed of a polymer and a nonaqueous electrolyte may also be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has the effect of suppressing liquid leakage. As the separator, the polymer gel may be used in combination with a porous resin film, a nonwoven fabric, or the like described above.

### [Nonaqueous electrolyte]

The nonaqueous electrolyte can be appropriately selected from known nonaqueous electrolytes. For the nonaqueous electrolyte, a nonaqueous electrolyte solution may be used. The nonaqueous electrolyte solution includes a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, compounds obtained by substituting some of the hydrogen atoms in these compounds with halogen may also be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these carbonates, EC is preferable.

Examples of the chain carbonates include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these carbonates, EMC is preferable.

As the nonaqueous solvent, it is preferable to use the cyclic carbonate or the chain carbonate, and it is more preferable to use the cyclic carbonate and the chain carbonate in combination. By using the cyclic carbonate, dissociation of the electrolyte salt can be promoted, thereby improving the ionic conductivity of the nonaqueous electrolyte solution. By using the chain carbonate, viscosity of the nonaqueous electrolyte solution can be kept low. When the cyclic carbonate and the chain carbonate are used in combination, the volume ratio between the cyclic carbonate and the chain carbonate (cyclic carbonate : chain carbonate) preferably falls within the range, for example, from 5 : 95 to 50 : 50.

The electrolyte salt can be appropriately selected from known electrolyte salts. Examples of the electrolyte salts include lithium salts, sodium salts, potassium salts, magnesium salts, and onium salts. Among these salts, lithium salts are preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₃)₂, LiN(SO₂CF₃)(SO₂C₄F₉), LiC(SO₂CF₃)₃, and LiC(SO₂C₂F₃)₃. Among these salts, inorganic lithium salts are preferable, and LiPF₆ is more preferable.

The content of the electrolyte salt in the nonaqueous electrolyte solution is, at 20°C and 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less. When the content of the electrolyte salt falls within the above range, the ionic conductivity of the nonaqueous electrolyte solution can be increased.

The nonaqueous electrolyte solution may contain an additive in addition to the nonaqueous solvent and the electrolyte salt. Examples of the additive include halogenated carbonic acid esters such as fluoroethylene carbonate (FEC) and difluoroethylene carbonate (DFEC); oxalates such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran; partially halogenated products of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluene sulfonate, dimethyl sulfate, ethylene sulfate, sulfolane, dimethyl sulfone, diethyl sulfone, dimethylsulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used singly, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, particularly preferably 0.3% by mass or more and 3% by mass or less, with respect to the total mass of the nonaqueous electrolyte solution. When the content of the additive falls within the above range, it is possible to improve capacity retention performance or cycle performance after high-temperature storage, and to further improve safety.

For the nonaqueous electrolyte, a solid electrolyte may be used, or a nonaqueous electrolyte solution and a solid electrolyte may be used in combination.

The solid electrolyte can be selected from any materials that have ionic conductivity and is solid at normal temperature (for example, 15°C to 25°C), such as lithium, sodium, and calcium. Examples of the solid electrolyte include a sulfide solid electrolyte, an oxide solid electrolyte, a nitride solid electrolyte, and a polymer solid electrolyte.

Examples of the sulfide solid electrolyte include Li₂S-P₂S₅, LiI-Li₂S-P₂S₅, and Li₁₀Ge-P₂S₁₂ in the case of a lithium ion secondary battery.

The shape of the energy storage device according to the present embodiment is not particularly limited, and examples thereof include cylindrical batteries, prismatic batteries, flat batteries, coin batteries and button batteries.

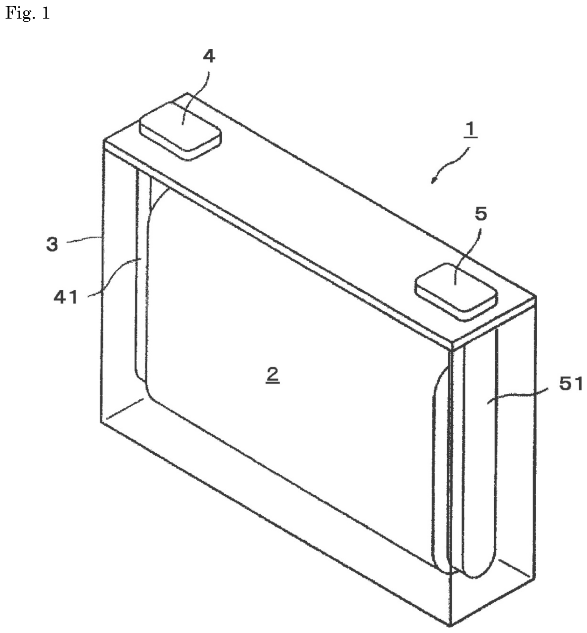

Fig. 1 illustrates an energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### [Energy storage apparatus]

The energy storage device according to the present embodiment can be mounted, as an energy storage unit (battery module) configured by assembling a plurality of energy storage devices, on a power source for a motor vehicle such as an electric vehicle (EV), a hybrid electric vehicle (HEV), and a plug-in hybrid electric vehicle (PHEV), a power source for an electronic device such as a personal computer and a communication terminal, a power source for power storage, or the like. In this case, the technique of the present invention may be applied to at least one energy storage device included in the energy storage unit.

An energy storage apparatus according to an embodiment of the present invention includes two or more energy storage devices, including one or more energy storage devices according to an embodiment of the present invention (hereinafter, referred to as "second embodiment"). The technique according to an embodiment of the present invention may be applied to at least one energy storage device included in the energy storage apparatus according to the second embodiment, and the energy storage apparatus may include one energy storage device according to the embodiment of the present invention described above along with one or more energy storage devices not according to the embodiment of the present invention described above, or may include two or more energy storage devices according to the embodiment of the present invention described above.

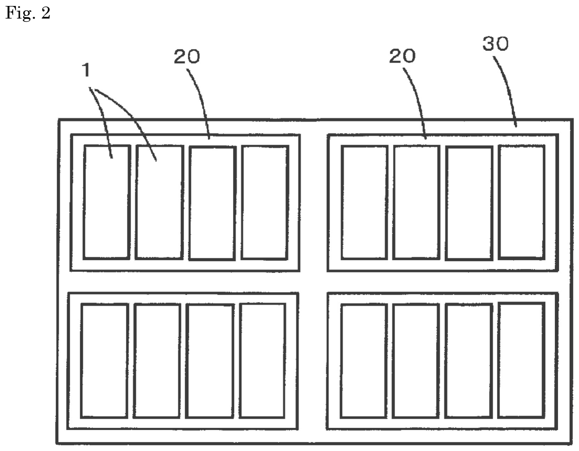

Fig. 2 illustrates an example of an energy storage apparatus 30 according to the second embodiment obtained by further assembling energy storage units 20 that each include two or more electrically connected energy storage devices 1 assembled. The energy storage apparatus 30 may include a busbar (not shown) that electrically connects two or more energy storage devices 1, a busbar (not shown) that electrically connects two or more energy storage units 20, or the like. The energy storage unit 20 or the energy storage apparatus 30 may include a state monitor (not shown) that monitors the state of one or more energy storage devices.

### [Method for producing energy storage device]

A method for producing the energy storage device of the present embodiment can be appropriately selected from known methods. The producing method includes, for example, preparing an electrode assembly, preparing an electrolyte, and housing the electrode assembly and the electrolyte in a case. Preparing the electrode assembly includes preparing a positive electrode and a negative electrode and forming an electrode assembly by stacking or winding the positive electrode and the negative electrode with a separator interposed therebetween.

Housing the electrolyte in the case can be appropriately selected from known methods. For example, in the case of using a nonaqueous electrolyte solution for the electrolyte, the nonaqueous electrolyte solution may be injected through an inlet formed in the case, and then the inlet may be sealed.

### [Other embodiments]

The positive active material particles, the positive active material composite, the positive electrode for an energy storage device, the energy storage device, and the energy storage apparatus of the present invention are not limited to the embodiment described above, and various changes may be made without departing from the scope of the present invention. For example, to the configuration of an embodiment, the configuration of another embodiment can be added, or a part of the configuration of an embodiment can be replaced with the configuration of another embodiment or a well-known technique. Furthermore, a part of the configuration of an embodiment can be deleted. In addition, a well-known technique can be added to the configuration of an embodiment.

While the case where the energy storage device is used as a nonaqueous electrolyte secondary battery (for example, lithium ion secondary battery) that can be charged and discharged has been described in the above embodiment, the type, shape, dimensions, capacity, and the like of the energy storage device are arbitrary. The present invention can also be applied to various secondary batteries and capacitors such as electric double-layer capacitors and lithium ion capacitors. The energy storage device of the present invention may be an energy storage device other than a nonaqueous electrolyte energy storage device.

While the electrode assembly in which the positive electrode and the negative electrode are stacked with the separator interposed therebetween has been described in the above embodiment, the electrode assembly may be configured without a separator. For example, the positive electrode and the negative electrode may be brought into direct contact with each other, with a non-conductive layer formed on the active material layer of the positive electrode or negative electrode.

### EXAMPLES

Hereinafter, the present invention will be described more specifically with reference to Examples. The present invention is not limited to the following Examples.

### [Example 1]

### (Preparation of positive active material particles)

Positive active material particles composed of secondary particles of lithium iron phosphate coated with a carbon material were obtained by the following procedure.

While a 1 mol/dm³ aqueous FeSO₄ solution was added dropwise at a constant rate to a 2 dm³ reaction case containing 750 cm³ of ion-exchanged water, a 4 mol/dm³ aqueous NaOH solution, a 0.75 mol/dm³ aqueous NH₃ solution, and a 0.5 mol/dm³ aqueous NH₂NH₂ solution were added dropwise so that the pH of a reaction liquid during the dropwise addition of the aqueous FeSO₄ solution was maintained at a constant value of 11.0 ± 0.1, thereby preparing an Fe(OH)₂ precursor. The temperature of the reaction case was set at 50°C ± 2°C. Next, the prepared Fe(OH)₂ precursor was taken out from the reaction case and solid-phase mixed with 116 parts by mass of LiH₂PO₄ and 10 parts by mass of sucrose powder based on 100 parts by mass of the Fe(OH)₂ precursor. Then, the resulting mixture was fired at a firing temperature of 650°C in a nitrogen atmosphere to obtain positive active material particles of Example 1 composed of particles of LiFePO₄, which is a lithium transition metal compound having a polyanion structure, coated with a carbon material.

The content of the carbon material in the obtained positive active material particles of Example 1 was 1.0% by mass. The average particle size of the positive active material particles of Example 1 measured by the above method was 10 µm. The breaking test force of the positive active material particles of Example 1 measured by the above method was 4.2 mN.

### (Preparation of positive electrode)

A positive composite paste was prepared using the obtained positive active material particles, acetylene black (AB) as a conductive agent, polyvinylidene fluoride (PVDF) as a binder, and N-methylpyrrolidone (NMP) as a dispersion medium. The mass ratio of the positive active material particles, AB, and PVDF was 90 : 5 : 5 in terms of solid content. The positive composite paste was applied onto an aluminum foil that served as a positive substrate, dried, and roll-pressed to form a positive active material layer (positive active material composite), thereby obtaining a positive electrode of Example 1.

### (Preparation of negative electrode)

A negative composite paste was prepared by mixing graphite as a negative active material, a styrene-butadiene rubber (SBR) as a binder, carboxymethyl cellulose (CMC) as a thickener, and water as a dispersion medium. The mass ratio of graphite, SBR, and CMC was 96 : 3.3 : 0.7 in terms of solid content. The negative composite paste was applied onto a copper foil that served as a negative substrate, dried, and roll-pressed to form a negative active material layer, thereby obtaining a negative electrode.

### (Nonaqueous electrolyte)

A nonaqueous electrolyte was obtained by dissolving, at a concentration of 1.1 mol/dm³, LiPF₆ in a solvent obtained by mixing ethylene carbonate (EC), diethyl carbonate (DEC), and ethyl methyl carbonate (EMC) at a volume ratio of 30 : 35 : 35.

### (Separator)

As a separator, a microporous polyethylene film was used.

### (Assembly of energy storage device)

The positive electrode, the negative electrode, and the separator were stacked to prepare an electrode assembly. The obtained electrode assembly was housed in a case, the nonaqueous electrolyte was then injected into the case, and the case was sealed to obtain an energy storage device of Example 1.

### [Examples 2 to 5 and Comparative Examples 1 and 2]

Positive active material particles, positive electrodes, and energy storage devices of Examples 2 to 5 and Comparative Examples 1 and 2 were obtained similarly to Example 1, except that, in the preparation of the positive active material particles, the reaction liquid in the production of the Fe(OH)₂ precursor was adjusted so that the pH thereof was maintained at the value indicated in Table 1 (± 0.1). The pH of the reaction liquid was adjusted by changing the amount of each aqueous solution to be added dropwise.

The contents of the carbon material in the obtained positive active material particles were each 1.0% by mass. The average particle sizes of the positive active material particles measured by the method described above were each 10 µm. The breaking test forces of the positive active material particles measured by the method described above are indicated in Table 1.

### [Examples 6 to 11 and Comparative Examples 3 to 5]

Positive active material particles, positive electrodes, and energy storage devices of Examples 6 to 11 and Comparative Examples 3 to 5 were obtained similarly to Example 1, except that, in the preparation of the positive active material particles, the reaction liquid in the production of the Fe(OH)₂ precursor was adjusted so that the pH thereof was maintained at the value indicated in Table 1 (± 0.1), and the firing was performed after a raw material containing an additive element indicated in Table 1 was further added to the mixture obtained by the solid-phase mixing so that the content of the additive element was 1% by mass. It is to be noted that the raw materials containing the additive element described above are all oxides and are indicated in parentheses in the column of "Additive element" in Table 1.

The contents of the carbon material in the obtained positive active material particles were each 1.0% by mass. The average particle sizes of the positive active material particles measured by the method described above were each 10 µm. The breaking test forces of the positive active material particles measured by the method described above are indicated in Table 1.

### [Evaluation]

### (Initial charge-discharge)

Each of the obtained energy storage devices was subjected to initial charge-discharge at 25°C in the following manner. The device was subjected to constant current constant voltage charge at a charge current of 0.2 C and an end-of-charge voltage of 3.5 V. With regard to the charge termination conditions, the charge was performed until the charge current reached 0.01 C. The charge was followed by a 10-minute pause. Thereafter, the device was subjected to constant current discharge at a discharge current of 0.2 C and an end-of-discharge voltage of 2.0 V.

### (Initial capacity confirmation test)

Next, an initial capacity confirmation test was conducted on each energy storage device at 25°C in the following manner. The device was subjected to constant current constant voltage charge at a charge current of 1.0 C and an end-of-charge voltage of 3.5 V. With regard to the charge termination conditions, the charge was performed until the charge current reached 0.01 C. The charge was followed by a 10-minute pause period. Thereafter, the device was subjected to constant current discharge at a discharge current of 1.0 C and an end-of-discharge voltage of 2.0 V. The discharge capacity at this time was defined as the "initial discharge capacity". The fully charged state based on the initial discharge capacity was defined as 100% state of charge (SOC).

### (Initial power confirmation test)

Each of the energy storage devices that had been subjected to the initial capacity confirmation test was subjected to constant current charge at a charge current of 0.2 C in a thermostatic chamber at 25°C until the SOC reached 50%. With regard to the charge termination conditions, the charge was performed until the total charge time reached 2.5 hours. Next, the device was discharged for 60 seconds at discharge currents of 0.2 C, 0.5 C, and 1.0 C. After the discharge was terminated, a 10-minute pause period was provided, and then auxiliary charge was performed at a charge current of 0.2 C until the SOC reached 50%. A graph of current-voltage characteristics was obtained by plotting the voltage 10 seconds after the start of each discharge on the vertical axis and the discharge current on the horizontal axis. From this graph, the power [W] at 10 seconds was obtained by an IV method with a lower limit voltage of 2.0 V, and this power was taken as the initial power at 25°C. The results are shown in Table 1.

**[Table 1]**

| | pH of reaction liquid | Breaking test force [mN] | Additive element | Initial power at 25°C [W] |
|---|---|---|---|---|
| Comparative Example 1 | 12.0 | 3.2 | None | 8 |
| Comparative Example 2 | 11.5 | 3.5 | None | 12 |
| Example 1 | 11.0 | 4.2 | None | 21 |
| Example 2 | 10.5 | 5.0 | None | 21 |
| Example 3 | 10.0 | 8.6 | None | 22 |
| Example 4 | 9.5 | 11.5 | None | 22 |
| Example 5 | 9.0 | 15.2 | None | 22 |
| Comparative Example 3 | 12.0 | 3.2 | Zr (ZrO₂) | 8 |
| Example 6 | 11.5 | 3.5 | Zr (ZrO₂) | 22 |
| Example 7 | 11.0 | 4.2 | Zr (ZrO₂) | 24 |
| Example 8 | 10.5 | 5.0 | Zr (ZrO₂) | 24 |
| Example 9 | 10.0 | 8.6 | Zr (ZrO₂) | 25 |
| Example 10 | 9.5 | 11.5 | Zr (ZrO₂) | 25 |
| Example 11 | 9.0 | 15.2 | Zr (ZrO₂) | 25 |
| Comparative Example 4 | 11.5 | 3.5 | Al (Al₂O₃) | 14 |
| Comparative Example 5 | 11.5 | 3.5 | B (B₂O₃) | 12 |

As shown in Table 1, in Examples 1 to 5 in which the zirconium element was not added and the breaking test force was 4.2 mN or more, the initial powers (initial power at 25°C) were larger than those in Comparative Examples 1 and 2 in which the zirconium element was not added and the breaking test force was less than 4.2 mN. In Examples 6 to 11 in which the zirconium element was added and the breaking test force was 3.5 mN or more, the initial powers were larger than that in Comparative Example 3 in which the zirconium element was added and the breaking test force was less than 3.5 mN. In Comparative Examples 4 and 5, the aluminum element and boron were added, respectively, and the initial powers were smaller than that in Example 6 in which the zirconium element was added.

The above results suggest that the interface resistance between the positive substrate and the positive active material particles was reduced due to the large breaking test force of the positive active material particles, and the reduction of the interface resistance was promoted by adding the zirconium element.

### INDUSTRIAL APPLICABILITY

The present invention can be applied to, for example, energy storage devices used as power sources for electronic devices such as personal computers and communication terminals, motor vehicles, and the like.

### DESCRIPTION OF REFERENCE SIGNS

1: Energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. Positive active material particles comprising a lithium transition metal compound having a polyanion structure,
wherein a breaking test force is 3.5 mN or more.

2. The positive active material particles according to claim 1, wherein the breaking test force is 4.2 mN or more.

3. The positive active material particles according to claim 1, further comprising at least one of the zirconium element and the niobium element.

4. A positive active material composite comprising the positive active material particles according to claim 2 or 3.

5. A positive electrode for an energy storage device, comprising:
a positive substrate; and
the positive active material composite according to claim 4, the positive active material composite being stacked on the positive substrate.

6. An energy storage device comprising the positive electrode for an energy storage device according to claim 5.

7. An energy storage apparatus comprising two or more energy storage devices, including one or more energy storage devices according to claim 6.
